## Europäisches Patentamt
## European Patent Office
## Office européen des brevets

(19)

(11) Veröffentlichungsnummer: **0 206 279**
**B1**

(12)  # EUROPÄISCHE PATENTSCHRIFT

(45) Veröffentlichungstag der Patentschrifft:
**17.01.90**

(21) Anmeldenummer: **86108424.2**

(22) Anmeldetag: **20.06.86**

(51) Int. Cl.⁴: **H 04 M 15/00, H 04 M 3/00**

(54) **Schaltungsanordnung zur geräuscharmen Einspeisung von Impulsen aus einer sinusförmigen Wechselspannung, insbesondere von 16-kHz-Gebührenimpulsen.**

(30) Priorität: **21.06.85 DE 3522284**

(43) Veröffentlichungstag der Anmeldung:
**30.12.86 Patentblatt 86/52**

(45) Bekanntmachung des Hinweises auf die Patenterteilung:
**17.01.90 Patentblatt 90/03**

(84) Bennante Vertragsstaaten:
**BE DE**

(56) Entgegenhaltungen:
**AT-B-304 651**

(73) Patentinhaber: **Siemens Aktiengesellschaft
Wittelsbacherplatz 2
D-8000 München 2 (DE)**

(72) Erfinder: **Kunisch, Paul, Dipl.-Ing.
Kidlerstrasse 41
D-8000 München 70 (DE)**

**EP 0 206 279 B1**

LIBERGRAF, STOCKHOLM 1990

## Beschreibung

In Fernmeldeanlagen, in denen jeweils während des Bestehens einer Verbindung über die betreffende Teilnehmeranschlußleitung ohne Beeinträchtigung der Nutzsignalübertragung Signalimpulse zu einer an einer solchen Verbindung beteiligten Teilnehmerstelle zu übertragen sind, werden solche Signalimpulse vielfach in Form einer Folge von Impulsen aus einer sinusförmigen Wechselspannung außerhalb des Nutzsignalfrequenzbereiches übertragen; so kann man zu einem bei einer rufenden Fernsprech-Teilnehmerstelle vorgesehenen Gebührenanzeiger oder zu einem Münzfernsprecher zu übertragende Gebührenzählimpulse in Form einer zeitzonen-abhängigen Folge von Impulsen aus einer 16-kHz-Sinusspannung oberhalb des Sprachbandes übertragen.

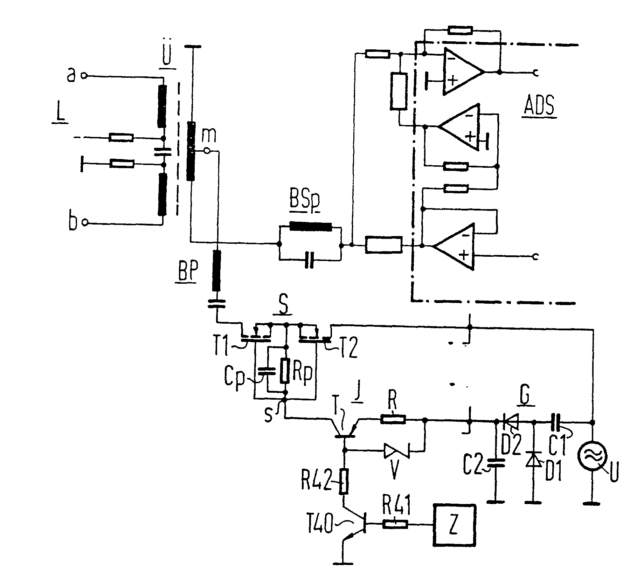

Zur vermittlungsstellenseitigen Einspeisung von 16-kHz-Gebührenimpulsen in eine Teilnehmeranschlußleitung ist es bekannt, eine 16-kHz-Sinusspannungsquelle über taktgesteuerte Schaltkontakte an einen Übertrager mit parallel zur Sekundärwicklung liegendem Serienresonanzkreis anzuschalten, der sekundärseitig über einen Saugkreis (Bandpaß) zu den beiden Adern der Teilnehmeranschlußleitung führt, wobei diese in Richtung zur Vermittlungsstelle hin durch einen Sperrkreis abgeriegelt wird (siehe beispielsweise Krause: Ortsämter mit Wählbetrieb, 5. Auflage, Goslar 1962, Abb. 155). Eine solche bekannte Schaltungsanordnung kann sowohl bei Abriegelung des Speisestromkreises durch eine Drossel-Kondensatoren-Schaltung (s. z. B. Krause, a.a.O., Abb. 154 oben) als auch bei Abriegelung des Speisestromkreises durch eine übertrager-Kondensator-Schaltung (s. z. B. Krause, a.a.O., Abb. 134 und 154 unten) als schließlich auch dann Anwendung finden, wenn, wie dies auch (beispielsweise aus IEEE Transactions on Electron Devices, ED-25(1978)2, 175...179, Fig. 2, und aus telcom report 7(1984)2, 86...92, Bild 3) bekannt ist, die Teilnehmeranschlußleitung in der Vermittlungsstelle von zwei vom Speisestrom durchflossenen, über einen Kondensator miteinander verbundenen teilnehmerseitigen Wicklungen eines Leitungsübertragers mit einer ggf. einseitig geerdeten teilnehmerabgewandten Wicklung abgeschlossen wird; wegen der erforderlichen Ruf- und Stoßspannungsfestigkeit der Bauelemente und z. T. wegen der Vormagnetisierung durch den Speisestrom sind damit jedoch ein relativ hoher Platzbedarf und relativ hohe Kosten verbunden, wobei diese beiden Gesichtspunkte zukünftig wesentlich stärker zum Tragen kommen, weil Fernmeldeverwaltungen dazu übergehen, die Möglichkeit einer 16-kHz-Gebührenimpuls-Einspeisung für alle Teilnehmeranschlüsse schaltungstechnisch vorzuleisten.

Entsprechendes gilt auch für eine (aus AT-B-304 651) bekannte Schaltungsanordnung für die Einspeisung von Wechselstrom-Zählimpulsen in Empfangsrelais für Gleichstromimpulse enthaltende Zählübertragungen in Fernmelde-, insbesondere Fernsprechanlagen, bei der eine Schaltungsanordnung zur geräuscharmen Einspeisung von Impulsen aus einer sinusförmigen Wechselspannung, insbesondere von 16-kHz-Gebührenimpulsen, in wenigstens eine Fernmeldeleitung, insbesondere Teilnehmeranschlußleitung, die durch zwei von einem Speisegleichstrom durchflossene, galvanisch miteinander verbundene fernmeldeleitungsseitige Wicklungen eines Leitungsübertragers abgeschlossen ist, dessen der Fernmeldeleitung abgewandte, unsymmetrisch beschaltete Wicklung galvanisch mit einer die Wechselspannung abgebenden Wechselspannungsquelle über einen impulstaktgesteuerten Schalter verbunden ist.

Es sei an dieser Stelle bemerkt, daß (aus DE-PS-3 237 550) eine Schaltungsanordnung zum geräuscharmen Ein- und Ausschalten von Impulsen aus einer sinusförmigen Wechselspannung, insbesondere von 16-kHz-Gebührenimpulsen, bekannt ist, in der die Wechselspannungsquelle an einen aus einem Festwiderstand und einem steuerbaren Widerstand gebildeten Spannungsteiler angeschlossen ist, wobei ein Impulstaktgeber über einen zur Formung von trapezförmigen Impulsen dienenden rückgekoppelten Operationsverstärker an den Steuereingang des steuerbaren Widerstandes angeschlossen ist und wobei dem Ausgang des steuerbaren Widerstandes, an welchem die Wechselspannungsimpulse abgenommen werden, ein eine Impedanzwandlerstufe bildender weiterer rückgekoppelter Operationsverstärker nachgeschaltet ist. Diese bekannte Schaltungsanordnung benötigt nicht nur für die in ihr vorgesehenen Operationsverstärker gesonderte Stromversorgungen, sondern ggf. auch einen besonderen, hinreichend leistungsstarken Operationsverstärker, dessen Verstärkung sich übrigens bei Änderung des Spannungsteilerverhältnisses ebenfalls ändert, was sich entsprechend auf die Einspeisung der Wechselspannung auswirkt. Nähere Berührungspunkte mit der nachfolgend beschriebenen Erfindung, die weder eine gesonderte Stromversorgung noch eine aktive Impulsformerstufe benötigt, sind nicht gegeben.

Die Erfindung bezieht sich auf die Einspeisung von Impulsen aus einer sinusförmigen Wechselspannung, insbesondere von 16-kHz-Gebührenimpulsen, in Fernmeldeleitungen, insbesondere Teilnehmeranschlußleitungen, die in der zuletzt erwähnten Weise jeweils durch galvanisch voneinander getrennte und kapazitiv miteinander verbundene, von einem Speisestrom durchflossene (leitungsseitige) Wicklungen eines Leitungsübertragers mit einer unsymmetrisch beschalteten fernmeldeleitungsabgewandten Wicklung abgeschlossen sind; die Erfindung stellt sich dazu die Aufgabe, eine solche Signaleinspeisung aus einer zentralen Wechselspannungsquelle in eine Vielzahl solcher Fernmeldeleitungen ohne größeren schaltungstechnischen Aufwand zu ermöglichen. Erfindungsgemäß wird dies dadurch erreicht, daß die leitungsabgewandte Wicklung des Leitungsübertragers jeder solchen Fernmeldeleitung galvanisch mit der Wechselspannungsquelle über einen MOS-FET-Schalter verbindbar ist, dessen mit einem RC-Parallel-Glied beschalteter Steuereingang mit einer vom Impulstaktgeber gesteuerten Gleichstromquellenschaltung verbunden ist, die von einer ihrerseits von der Wechselspannungsquelle gespeisten Spannungsverdoppler-Gleichrichterschaltung gespeist wird.

Die Erfindung bringt über den Wegfall eines gesonderten, einen mit einem Resonanzkreis beschalteten Übertrager enthaltenden Wechselspannungs-Einspeisekreises und über den Wegfall des Erfordernisses ruf- und stoßspannungsfester Bauelemente hinaus den weiteren Vorteil mit sich, eine weiche Tastung jedes Schalters und damit ein geräuscharmes Ein- und Ausschalten der Wechselspannung in einem weiten Spannungsbereich durch direkt aus der durchzuschaltenden Wechselspannung gewonnene Betriebs- bzw. Steuerspannungen ermöglichen zu können, ohne daß es einer externen Gleichspannungsversorgung bedürfte, wobei einerseits unabhängig von Momentanwert und Amplitude der Wechselspannung stets die erforderliche Aussteuerung des jeweiligen Schalters gewährleistet ist und andererseits keine nennenswerte Verlustleistung aufgebracht werden muß.

In weiterer Ausgestaltung der Erfindung führt der MOS-FET-Schalter zu einem Mittelabgriff der fernmeldeleitungsabgewandten Wicklung des Leitungsübertragers, was es ermöglicht, bei vorhandener, herkömmlicherweise nur für eine Anschaltung sehr weniger Fernmeldeleitungen ausgelegter Wechselspannungsquelle auch an einer Mehrzahl von Fernmeldeleitungen auf Grund der Spannungstransformation hinreichend hohe Signalpegel zu gewährleisten. Dabei kann zweckmäßigerweise zwischen dem MOS-FET-Schalter und dem Mittelabgriff der Wicklung des Leitungsübertragers ein dessen Teilstreuinduktivität mitumfassender Bandpaß eingefügt sein, was es ermöglicht, mit Streuinduktivitäten verbundene Spannungsverluste zumindest teilweise zu kompensieren.

Weitere Besonderheiten der Erfindung werden aus der nachfolgenden näheren Erläuterung eines Ausführungsbeispiels einer Schaltungsanordnung gemäß der Erfindung anhand der Zeichnung ersichtlich.

In der Zeichnung ist schematisch in einem zum Verständnis der Erfindung erforderlichen Umfang ein Ausschnitt aus einer in einer Digital-Vermittlungsstelle eine Analog-Teilnehmeranschlußleitung L abschließenden Teilnehmeranschlußschaltung dargestellt, in der die Teilnehmeranschlußleitung L durch zwei von einem Speisegleichstrom durchflossene, galvanisch voneinander getrennte und kapazitiv miteinander verbundene Wicklungen eines Leitungsübertragers Ü abgeschlossen ist, dessen einseitig an Masse liegende und damit unsymmetrisch beschaltete, der Teilnehmeranschlußleitung L abgewandte Wicklung mit einer in der Zeichnung nur mit einigen Eingangs- und Ausgangs-Schaltungsbausteinen angedeutete Analog/Digital-Schnittstellenschaltung ADS verbunden ist. Solche Schnittstellenschaltungen sind beispielsweise in Form des sog. Customer Optimized Subscriber Line Audio-Processing Circuit am 7905 - COSLAC der Firma AMD oder des sog. Signal-Processing Codec Filter PEB 2060 - SICOFI der Firma Siemens (siehe auch telcom report 7 (1974) 2, 86...92) bekannt und brauchen daher hier nicht weiter betrachtet zu werden.

Zum geräuscharmen Einspeisen von Impulsen aus einer sinusförmigen Wechselspannung, beispielsweise von 16-kHz-Gebührenimpulsen, in die Teilnehmeranschlußleitung L ist ein Mittelabgriff m der der Leitung L abgewandten Wicklung des Leitungsübertragers Ü galvanisch mit der die (16-kHz-)Wechselspannung abgebenden Spannungsquelle U verbunden, und zwar über einen mit zwei in Reihe geschalteten MOS-Feldeffekttransistoren T1 und T2, beispielsweise zwei SIPMOS-Transistoren BSS 100, gebildeten MOS-FET-Schalter S. Zwischen dem Verbindungspunkt der beiden Feldeffekttransistoren T1, T2 und deren Steuerelektroden liegt die Parallelschaltung eines Widerstandes Rp (von z. B. 200 kOhm) und eines Kondensators Cp (von beispielsweise 220 nF); zu dem mit diesem RC-Parallel-Glied Rp, Cp beschalteten Steuereingang s des MOS-FET-Schalters S führt eine von einem Impulstaktgeber Z gesteuerte Gleichstromquellenschaltung J. Diese Gleichstromquellenschaltung kann, wie dies auch in der Zeichnung dargestellt ist, in prinzipiell (z. B. aus Steimel: Elektronische Speisegeräte, München 1957, Bild 3.36) bekannter Weise als gleichspannungsgespeiste, durch Rückwärtsregelung stabilisierte Gleichstromquelle mit einem Längstransistor T (beispielsweise des Typs BC 307), einem Diskriminatorwiderstand R (von beispielsweise 82,5 kOhm) und einer einen Vergleichsspanungsgeber bildenden Zenerdiode V (beispielsweise des Typs BZX 97 C3V9) ausgebildet sein. Gespeist wird die Gleichstromquellenschaltung J durch eine ihrerseits von der Wechselsspannungsquelle U gespeisten Spannungsverdoppler-Gleichrichterschaltung G, die, wie dies auch aus der Zeichnung ersichtlich ist, als (prinzipiell z. B. aus Meinke/Gundlach: Taschenbuch der Hochfrequenztechnik, 1956, Abb. Y7.5.b bekannte) Kaskadenschaltung aus den beiden (z. B. aus Meinke/Gundlach, a.a.O., Abb. Y7.1 bekannten) Einweg-Spitzengleichrichter-Grundschaltungen mit jeweils einer Diode D1 bzw. D2 (beispielsweise des Typs BAY 43) und einem Längs-Kondensator C1 (von beispielsweise 100 nF) bzw. einem Quer-Kondensator C2 (von beispielsweise 22 nF) ausgebildet sein kann.

Zwischen den MOS-FET-Schalter S und den Mittelabgriff m der leitungsabgewandten Wicklung des Leitungsübertragers Ü ist ein (16-kHz-)Bandpass BP eingefügt, der eine selektive Einspeisung der (16-kHz-)Wechselspannung unter Zurückhaltung etwa vom Wechselspannungsgenerator U außerdem herrührender störender Rauschspannungen ermöglicht; die Induktivität des Bandpasses BP umfaßt dabei zweckmäßigerweise auch eine Streuinduktivität des Leitungsübertragers Ü, so daß durch entsprechende Blindwiderstandskompensation eine Reduktion der Spannungsverluste erreicht wird.

Zwischen Leitungsübertrager Ü und Analog/Digital-Schnittstellenschaltung ADS liegt außerdem eine (16-kHz-)Bandsperre BSp, um die über den Leitungsübertrager Ü in die Teilnehmeranschlußleitung L eingekoppelten, außerhalb des Nutzsignalbandes liegenden Wechselspannungsimpulse von der Analog/Digital-Schnittstellenschaltung ADS fernzuhalten.

Bandpaß BP und Bandsperre BSp werden beide nicht vom Speisegleichstrom der Teilnehmeranschlußleitung L durchflossen und unterliegen damit auch keiner Vormagnetisierung; ihre Bauteile brauchen auch nicht ruf- und stoßspannungsfest zu sein, so daß in den beiden Filtern BP und BSp relativ kleine Spulen- und Kondensator-Bauformen vorgesehen sein können.

In der Zeichnung ist noch angedeutet, daß zwischen dem Impulstaktgeber Z und der Stromquellenschaltung J eine Pegelanpassungsschaltung R41, T40, R42 eingefügt sein kann, wenn die vom Impulstaktgeber Z beispielsweise mit TTL-Pegel abgegebenen Ausgangssignale zur unmittelbaren Steuerung der Konstantstromquelle J nicht geeignet sind.

Die im vorstehenden in ihrem schaltungstechnischen Aufbau umrissene Schaltungsanordnung gewährleistet eine geräuscharme Einspeisung von Impulsen aus der von der zentralen (16-kHz-)Wechselspannungsquelle U abgegebenen Wechselspannung in eine Vielzahl von Teilnehmeranschlußleitungen L; in der Zeichnung ist dies durch entsprechende Vielfachzeichen zwischen Wechselspannungsquelle U und Schalter S bzw. zwischen Gleichrichterschaltung G und Stromquellenschaltung J zum Ausdruck gebracht.

Dabei wird eine weiche Tastung jedes Schalters S durch entsprechend langsam vor sich gehende Auf- und Entladung des Kondensators Cp des Impulsformergliedes Rp, Cp erreicht; durch Änderungen in der Dimensionierung des Kondensators Cp und der Widerstände Rp und R können Anstiegszeit und Abfallzeit der Impulsflanken variiert werden.

Wie schon erwähnt, kann der Schalter S mit zwei SIPMOS-Transistoren BSS 100 realisiert sein, die eine niederohmige Durchschaltung der Gebührenzählimpulsspannung gestatten. Zur Aufsteuerung der SIPMOS-Transistoren ist eine Gate-Spannung erforderlich, die um ca. 4 V über dem Maximalwert der durchzuschaltenden Spannung liegt. Der 16-kHz-Generator U möge eine Wechselspannung mit einer Amplitude $U_U$ von maximal 9 V (und minimal 6,4 V) liefern; die minimale Gate-Spannung muß dann etwa 16,7 V ($9 \times 2^{1/2} + 4$) betragen. Die Spitzenwertgleichrichterschaltung G gibt im Leerlauf eine Gleichspannung $U_G = 2 \times 2^{1/2} \times U_U - 2U_D$ ab, worin $U_D$ der Spannungsabfall an einer Gleichrichterdiode (D1, D2) ist. Bei $U_{Umin} = 6,4$ V ergibt sich $U_{Gmin} = 17,1$ V.

Die Kaskadenschaltung G belastet den 16-kHz-Generator U im Ruhezustand nicht; der während eines Zählimpulses fließende Strom ist um mehr als zwei Größenordnungen kleiner als der Gebührenzählimpulsstrom und kann insoweit vernachlässigt werden.

**Patentansprüche**

1. Schaltungsanordnung zur geräuscharmen Einspeisung von Impulsen aus einer sinusförmigen Wechselspannung, insbesondere von 16-kHz-Gebührenimpulsen, in wenigstens eine Fernmeldeleitung (L), insbesondere Teilnehmeranschlußleitung, die durch zwei von einem Speisegleichstrom durchflossene, galvanisch voneinander getrennte, aber kapazitiv miteinander verbundene fernmeldeleitungsseitige Wicklungen eines Leitungsübertragers (Ü) mit einer unsymmetrisch beschalteten fernmeldeleitungsabgewandten Wicklung abgeschlossen ist, mit einer die Wechselspannung abgebenden Wechselspannungsquelle (U) und einem impulstaktgesteuerten Schalter (S), *dadurch gekennzeichnet*, daß die leitungsabgewandte Wicklung des Leitungsübertragers (Ü) jeder solchen Fernmeldeleitung (L) galvanisch mit der Wechselspannungsquelle (U) über einen MOS-FET-Schalter (S) verbunden ist, dessen mit einem RC-Parallel-Glied (Rp, Cp) beschalteter Steuereingang (s) mit einer vom Impulstaktgeber (Z) gesteuerten Gleichstromquellenschaltung (J) verbunden ist, die von einer ihrerseits von der Wechselspannungsquelle (U) gespeisten Spannungsverdoppler-Gleichrichterschaltung (G) gespeist wird.

2. Schaltungsanordnung nach Anspruch 1, *dadurch gekennzeichnet*, daß eine mit der gleichgerichteten Wechselspannung gespeiste, durch Rückwärtsregelung stabilisierte Gleichstromquellenschaltung (J) mit einem Längstransistor (T) vorgesehen ist, dessen Ausgangselektrode mit den Steuerelektroden zweier in Reihe geschalteter, den MOS-FET-Schalter (S) bildender Feldeffekttransistoren (T1, T2) verbunden ist, zwischen deren Verbindungspunkt und deren Steuerelektroden das RC-Parallel-Glied (Rp, Cp) angeordnet ist.

3. Schaltungsanordnung nach Anspruch 1 oder 2, *dadurch gekennzeichnet*, daß der MOS-FET-Schalter (S) zu einem Mittelabgriff (m) der der Fernmeldeleitung (L) abgewandten Wicklung des Leitungsübertragers (Ü) führt.

4. Schaltungsanordnung nach Anspruch 3, *dadurch gekennzeichnet*, daß zwischen dem MOS-FET-Schalter (S) und dem Mittelabgriff (m) der Wicklung des Leitungsübertragers (Ü) ein dessen Teilstreuinduktivität mitumfassender Bandpaß (BP) eingefügt ist.

5. Schaltungsanordnung nach einem der Ansprüche 1 bis 4, *dadurch gekennzeichnet*, daß die Gleichrichterschaltung (G) als Kaskadenschaltung aus den beiden Einweg-Spitzengleichrichter-Grundschaltungen (C1, D1; D2, C2) ausgebildet ist.

6. Schaltungsanordnung nach einem der Ansprüche 1 bis 5, *dadurch gekennzeichnet*, daß dem Impulstaktgeber (Z) eine Pegelanpassungsschaltung (R41, T40, R42) nachgeschaltet ist.

**Revendications**

1. Montage pour injecter, avec un bruit faible, des impulsions tirées d'une tension alternative sinusoïdale, notamment des impulsions de taxe à 16 kHz, dans au moins une ligne de télécommunications (L) , notamment une ligne d'abonné, qui est fermée, du côté de la ligne de télécommunications, par deux enroulements parcourus par un courant continu d'alimentation, séparés galvaniquement l'un de l'autre, mais reliés entre eux de façon capacitive, d'un translateur de ligne (Ü) comportant un enroulement câblé de façon dissymétrique et situé à l'opposé de la ligne de télécommunications, une source de tension alternative (U) délivrant la tension alternative et un interrupteur (S) commandé par la cadence des impulsions, caractérisé par le fait que l'enroulement, situé à l'opposé de la ligne, du translateur de ligne (Ü) de chaque ligne de télécommunications (L) de ce type est relié galvaniquement à la source de tension alternative (U) par l'intermédiaire d'un interrupteur MOS-FET (S), dont l'entrée de commande (s), raccordée à un circuit RC parallèle (Rp, Cp) , est reliée à un circuit formant source de courant continu (J), qui est commandé par le générateur d'impulsions de cadence (Z) et est alimenté par un circuit doubleur de tension-redresseur (G), alimenté pour sa part par la source de tension alternative (U).

2. Montage suivant la revendication 1, caractérisé par le fait qu'un circuit formant source de courant continu (J), alimenté par la tension alternative redressée et stabilisé par une régulation par réaction, comporte un transistor longitudinal (T), dont l'électrode de sortie est reliée aux électrodes de commande de deux transistors à effet de champ (T1, T2), qui sont branchés en série et constituent l'interrupteur MOS-FET (S), le circuit RC parallèle (Rp, Cp) étant disposé entre le point de jonction et les électrodes de commande de ces transistors.

3. Montage suivant la revendication 1 ou 2, caractérisé par le fait que l'interrupteur MOS-FET (S) est raccordé à une prise médiane (m) de l'enroulement, situé à l'opposé de la ligne de télécommunications (L), du translateur de ligne (Ü).

4. Montage suivant la revendication 3, caractérisé par le fait qu'entre l'interrupteur MOS-FET (S) et la prise médiane (m) de l'enroulement du translateur de ligne (Ü) se trouve inséré un filtre passe-bande (BP) englobant simultanément l'inductance partielle de fuite du translateur.

5. Montage suivant l'une des revendications 1 à 4, caractérisé par le fait que le circuit redresseur (G) est réalisé sous la forme d'un circuit cascade comprenant les deux circuits de base formant redresseurs simple alternance à contact (C1, D1; D2, C2).

6. Montage suivant l'une des revendications 1 à 5, caractérisé par le fait que le générateur de la cadence d'impulsions (Z) est un circuit d'adaptation de niveau (R41, T40, R42).

**Claims**

1. Circuit arrangement for the low-noise injection of pulses from a sinusoidal alternating voltage, particularly of 16 kHz metering pulses, into at least one telecommunication line (L), particularly a subscriber line which is terminated by two windings, through which a feeding direct current flows and which are electrically isolated from one another but are capacitively connected to one another, on the telecommunication line side of a line transformer (Ü) with a winding connected to an unbalanced circuit on the side facing away from the telecommunication line, with an alternating voltage source (U) delivering the alternating voltage and a pulse-timing-controlled switch (S), characterized in that the winding on the side of the line transformer (Ü) facing away from the line, of each such telecommunication line (L), is electrically connected to the alternating-voltage source (U) via a MOS-FET switch (S) the control input (S) of which, to which a parallel RC section (Rp, Cp) is connected, is connected to a direct-current source circuit (J) which is controlled by the pulse-timing generator (Z) and is fed by a voltage doubler rectifier circuit (G) which, in turn, is fed by the alternating-voltage source (U).

2. Circuit arrangement according to Claim 1, characterized in that a direct-current source circuit (J), which is fed with the rectified alternating voltage and is stabilized by backward-acting regulation, is provided with a series transistor (T) the output electrode of which is connected to the control electrodes of two series-connected field effect transistors (T1, T2) which form the MOS-FET switch (S) and between the junction of which and the control electrodes of which the parallel RC section (Rp, Cp) is arranged.

3. Circuit arrangement according to Claim 1 or 2, characterized in that the MOS-FET switch (S) leads to a centre tap (m) of the winding on the side of the line transformer (Ü) facing away from the telecommunication line (L).

4. Circuit arrangement according to Claim 3, characterized in that between the MOS-FET switch (S) and the centre tap (m) of the winding of

the line transformer (Ü), a bandpass filter (BP), which also includes the partial stray inductance of the latter, is inserted.

5. Circuit arrangement according to one of Claims 1 to 4, characterized in that the rectifier circuit (G) is constructed as cascade circuit of the two basic oneway peak rectifier circuits (C1, D1; D2, C2).

6. Circuit arrangement according to one of Claims 1 to 5, characterized in that the pulse-timing generator (Z) is followed by a level-matching circuit (R41, T40, R42).